# EUROPÄISCHE PATENTSCHRIFT

(11) **EP 4 208 325 B1**
(45) Veröffentlichungstag und Bekanntmachung des Hinweises auf die Patenterteilung: **12.06.2024**
(21) Anmeldenummer: 21765847.5
(22) Anmeldetag: 16.08.2021
(51) Int. Cl.: B29C 53/58, F16L 53/38, B29D 23/00, B29C 53/84, A47J 31/00, A47J 31/54

(54) **VERFAHREN ZUR HERSTELLUNG EINER BEHEIZBAREN MEDIENLEITUNG**
PROCESS FOR THE PRODUCTION OF A HEATABLE MEDIUM LINE
PROCÉDÉ DE FABRICATION D'UNE LIGNE DE MÉDIA CHAUFFABLE

(30) Priorität: 03.09.2020 DE 102020122991
(43) Veröffentlichungstag der Anmeldung: 12.07.2023
(73) Patentinhaber: Silnova GmbH, 95111 Rehau (DE)
(72) Erfinder: HOFMEISTER, Tobias, 08261 Schöneck (DE); STARY, Michael, 4076 St. Marienkirchen an der Polsenz (AT); ZIELKE, Peter, 08626 Adorf (DE)
(86) Internationale Anmeldenummer: PCT/EP2021/072701
(87) Internationale Veröffentlichungsnummer: WO 2022/048894

(56) Entgegenhaltungen:
- EP-A1- 2 214 176
- WO-A1-2011/023395
- CN-A- 111 603 046
- CN-Y- 2 760 890
- DE-A1- 2 707 244
- DE-A1-102007 009 898
- TW-A- 201 129 223

## Beschreibung

Die Erfindung betrifft ein Verfahren zur Herstellung einer beheizbaren Medienleitung, insbesondere zur Führung und gleichzeitigen Nacherwärmung von Brühwasser oder eines frisch aufgebrühten Heißgetränkes in einem Heißgetränke-Automaten, gemäß dem Oberbegriff des Patentanspruchs 1. Bei dem Heißgetränk kann es sich insbesondere um Kaffee handeln, der in einem Kaffee-Vollautomaten zubereitet wird. Ein Heißgetränke-Automat, der z.B. mit Zubereitungs-Pads oder -Kapseln bzw. mit einem das Brühgut aufnehmenden Filter bestückt wird, ist jedoch für den Einsatz der erfindungsgemäß hergestellten Medienleitung ebenso geeignet wie auch grundsätzlich die Zubereitung anderer Heißgetränke, wie z.B. Tee, der Nutzung der erfindungsgemäßen Lehre nicht entgegensteht. Die Nacherwärmung kann dazu dienen, das Fluid nach einer gewissen Fließstrecke innerhalb des Automates wieder auf eine Temperatur aufzuheizen, die es bereits nach seiner Erhitzung im Automaten besaß bzw. ein zu starkes Abkühlen des Fluids in der Medienleitung zu verhindern.

Bei einem Kaffee-Vollautomaten besteht, sofern sich dieser nach einer längeren Standzeit in einem abgekühlten Zustand befindet, am Anfang eines Brühvorgangs häufig das Problem, dass der aus dem Automaten ausfließende, frisch aufgebrühte Kaffee vergleichsweise kalt ist, obwohl das zur Zubereitung verwendete Brühwasser zuvor ordnungsgemäß erhitzt wurde. Dies hängt damit zusammen, dass das aufgeheizte Brühwasser zu Beginn des Brühvorgangs beim Durchlauf durch anfänglich auf Raumtemperatur befindliche Baugruppen des Automaten oder auch durch noch im Automaten vorhandenes kaltes Restwasser sehr schnell abgekühlt wird. Auch in der der Brüheinrichtung des Automaten beispielsweise nachgeschalteten Medienleitung selbst kann es zu der unerwünschten Abkühlung kommen. Hierdurch ist die erste aus dem Automaten entnommene Tasse Kaffee oftmals nicht heiß genug, um einen uneingeschränkten Kaffeegenuss zu gewährleisten. Es sei an dieser Stelle bereits erwähnt, dass die Erfindung nicht auf die Verwendung der entsprechend hergestellten Medienleitung in Kaffee-Vollautomaten begrenzt ist, sondern grundsätzlich beispielsweise auch in Filterkaffee-Maschinen sowie Maschinen zur Zubereitung von Tee oder anderen Heißgetränken zum Einsatz kommen kann.

Aus der EP 2 582 273 B1 ist es bekannt, in die entsprechende, der Brüheinrichtung eines Kaffeeautomaten nachgeschalteten Medienleitung eine lokal begrenzte, separate Heizeinrichtung in Form eines Durchlauferhitzers einzubauen. Dies ist jedoch konstruktiv vergleichsweise aufwändig und erfordert ferner eine sehr hohe Heizleistung dieser Heizeinrichtung, um auch bei der sehr kurzen Durchlaufzeit des Brühwassers durch den Durchlauferhitzer einen ausreichenden Energieeintrag zu ermöglichen.

Ferner sind in Kraftfahrzeugbereich, z.B. aus der DE 20 2015 104 387 U1 beheizbare thermoplastische Medienleitungen zum Transport einer Harnstoff-Wasser-Lösung für die Abgasnachbehandlung bekannt, bei denen die Beheizung durch außenseitig auf die Medienleitung helixförmig aufgewickelte Heizdrähte erfolgt. Ein Verfahren mit den Merkmalen des Oberbegriffs des Patentanspruchs 1 ist aus der DE 10 2007 009 898 A1 bekannt.

Der Erfindung liegt die Aufgabe zugrunde, ein Verfahren zur Herstellung einer beheizbaren Medienleitung, insbesondere zum Transport und zur gleichzeitigen Vorwärmung von Brühwasser oder frisch aufgebrühtem Kaffee in einem Kaffee-Vollautomaten anzugeben, die einerseits kostengünstig herstellbar ist und andererseits eine effektive Nachbeheizung des durchlaufenden Brühwassers ermöglicht.

Diese Aufgabe wird durch ein Verfahren mit den Merkmalen des Patentanspruchs 1 gelöst. Die Wärmeübertragungsfolie kann eine Wärmeleitfähigkeit bei 0 °C von λ > 100 W/mK, bzw. λ > 200 W/mK aufweisen. Die erfindungsgemäß hergestellte Medienleitung kann sich strömungstechnisch gesehen hinter der Brüheinrichtung zur Kaffeezubereitung der Maschine befinden, also zur Führung und Nacherhitzung des frisch aufgebrühten Kaffees dienen. Alternativ hierzu ist es jedoch auch möglich, die Medienleitung strömungstechnisch gesehen vor der Brüheinrichtung anzuordnen. Im Rahmen der Erfindung liegt es ebenfalls, die beiden vorgenannten Alternativen miteinander zu kombinieren, d.h. eine erfindungsgemäß hergestellte Medienleitung strömungstechnisch gesehen sowohl vor als auch hinter der Brüheinrichtung vorzusehen. Durch die erfindungsgemäße Lehre wird eine kostengünstig herstellbare Medienleitung bereitgestellt, die für die beschriebenen Einsatzzwecke geeignet ist, insbesondere eine entsprechende thermische Stabilität aufweist und eine effektive Nacherhitzung des frisch aufgebrühten Kaffees bzw. des Brühwassers vor allem in der Anfangsphase des Brühvorgangs ermöglicht, in der die beschriebene Thematik der zu niedrigen Temperatur des den Automaten verlassenden Kaffeegetränks von besonderer Bedeutung ist. Zugleich wird auch nach einer längeren Betriebsdauer des Automaten, die z.B. mit einer Verkalkung und dadurch verschlechterten Wärmeübertragung vom Erhitzer des Automaten auf das aufzuheizende Brühwasser einhergehen kann, durch die Nacherhitzung die Zeitspanne verlängert, in der das Kaffeegetränk noch mit einer zufriedenstellenden Temperatur aus dem Automaten austritt, so dass bspw. eine Entkalkung des Automaten nicht mehr von so großer Dringlichkeit ist wie bisher. Durch die erfindungsgemäße Kombination einer Wärmeübertragungsfolie mit sehr guten Wärmeleiteigenschaften und dem entlang der Schlauchleitung aufgebrachten Heizmedium ist eine sehr gleichmäßige Erwärmung über eine große Fließlänge des Kaffees bzw. Brühwassers möglich, die einen effizienten Wärmeeintrag und damit signifikante Nacherhitzung ermöglicht. Dies erlaubt es, mittels einer vergleichsweise einfachen Konstruktion das durch die Schlauchleitung fließende Fluid in einem deutlichen Maße nachzuerhitzen, so dass insbesondere auch nach einem längeren Stillstand des Kaffee-Vollautomaten die erste frisch aufgebrühte Tasse Kaffee eine zufriedenstellend hohe Temperatur aufweist und damit einen uneingeschränkten Kaffeegenuss ermöglicht. Durch die helixförmige Wicklung des Heizmediums ist es ferner in vorteilhafter Weise möglich, die Medienleitung im Automaten knickfrei auch mit kleinen Biegeradien, bspw. < 40 mm, insbesondere < 30 mm, zu verlegen. Die Schlauchleitung wird zweckmäßigerweise mittels eines Extrusionsverfahrens hergestellt. Insgesamt ist mittels der erfindungsgemäßen Lehre eine wesentlich effektivere und konstruktiv einfachere Nacherhitzung des Brühwassers bzw. des frisch aufgebrühten Kaffees möglich, als dies zum Beispiel gemäß der Lehre nach EP 2 582 273 B1 der Fall ist.

Zweckmäßigerweise besteht die Wärmeübertragungsfolie aus einem metallischen Werkstoff, vorzugsweise Aluminium oder Kupfer. Die Schichtdicke der Wärmeübertragungsfolie beträgt vorzugsweise maximal 100 µm, beispielsweise maximal 50 µm, z.B. maximal 30 µm. Dies erlaubt einen gleichmäßigen Wärmeeintrag in die Schlauchleitung, selbst wenn die Wicklungen des Heizmediums vergleichsweise weit voneinander beabstandet sind. Die Schichtdicke der Wärmeübertragungsfolie beträgt ferner vorzugsweise mindestens 5 µm, z.B. mindestens 10 µm, um eine gewisse mechanische Robustheit der Folie zu gewährleisten. Im Querschnitt gesehen ist die Breite der Folie in der Regel mindestens 100 mal so groß wie Dicke, zweckmäßigerweise mindestens 500 mal so groß.

Im Rahmen der Erfindung liegt es, dass die Aufbringung des Heizmediums nach der Aufwicklung der Wärmeübertragungsfolie, also in einem separaten Fertigungsschritt erfolgt. Alternativ hierzu ist es jedoch auch möglich, dass das Heizmedium bereits vor der Aufwicklung der Wärmeübertragungsfolie auf diese aufgebracht wird und somit ein vorerzeugter Verbund von Folie und Heizmedium auf die Schlauchleitungsoberfläche aufgewickelt wird. Zweckmäßigerweise erfolgt die Aufwicklung der Wärmeübertragungsfolie und/oder des Heizmediums helixförmig entlang der Achse der Schlauchleitung. In der Regel sind die beiden Wicklungen von Heizmedium und Wärmeübertragungsfolie gleichsinnig, was bei einer helixförmigen Aufwicklung des zuvor beschreibenen Verbundes zwingend der Fall ist. Sofern jedoch die Aufwicklung des Heizmediums in einem separaten Fertigungsschritt nach der Aufwicklung der Wärmeübertragungsfolie erfolgt, kann es zweckmäßig sein, dass die Wicklung der Wärmeübertragungsfolie gegensinnig zur Wicklung des Heizmediums erfolgt. Hierdurch kann ggf. einem axialen Verrutschen der einzelnen Wicklungen der Wärmeübertragungsfolie nach längerem Einsatz der Medienleitung vorgebeugt werden. Im Rahmen der Erfindung liegt es ferner, dass sich die einzelnen Wicklungen der mindestens einen Wärmeübertragungsfolie randseitig überlappen, z.B. mit einer Überlappungsbreite von mindestens 1 mm, vorzugsweise mindestens 2 mm, z.B. 1 bis 10 mm, insbesondere 2 bis 5 mm. Die Wicklungen der mindestens einen Wärmeübertragungsfolie können aber auch axial entlang der Schlauchleitung, vorzugsweise gleichmäßig, zueinander beabstandet sein. Um der thermische Belastung aufgrund des Durchflusses von kochend heißem Wasser bzw. überhitztem Wasserdampf dauerhaft standzuhalten, enthält die Schlauchleitung zweckmäßigerweise Silikon, bzw. besteht die Schlauchleitung aus Silikon.

Das elektrische Heizmedium kann mindestens einen Heizdraht, z.B. mindestens zwei axial entlang der Schlauchleitung, vorzugsweise gleichmäßig, zueinander beabstandete Heizdrähte, mit vorzugsweise kreisförmigem Querschnitt umfassen. Sofern nur ein Heizdraht vorgesehen ist, sind auch hier vorteilhafterweise die einzelnen Wicklungen dieses Heizdrahtes axial entlang der Schlauchleitung gleichmäßig voneinander beabstandet. Der Durchmesser des kreisförmigen Querschnittes beträgt zweckmäßigerweise 0,5 - 1,5 mm. Alternativ hierzu oder auch in Kombination kann das Heizmedium mindestens eine Heizfolie, z.B. mindestens zwei axial entlang der Schlauchleitung zueinander versetzte Heizfolien, umfassen, die ggf. wiederum axial, vorzugsweise gleichmäßig, voneinander beabstandet angeordnet sind. Sofern nur eine Heizfolie vorgesehen ist, sind wiederum die einzelnen Wicklungen dieser Heizfolie axial entlang der Schlauchleitung vorzugsweise gleichmäßig voneinander beabstandet. Im Rahmen der Erfindung liegt es grundsätzlich aber auch, dass sich die Wicklungen der mindestens einen Heizfolie randseitig überlappen, so dass insbesondere das Heizmedium eine geschlossene Oberfläche bildet. Bei der Heizfolie ist im Querschnitt gesehen die Breite in der Regel mindestens zehnmal so groß wie Dicke, zweckmäßigerweise mindestens 20 mal so groß. Die Dicke der Heizfolie beträgt zum Beispiel 0,2 - 0,8 mm.

Um die Haftung auf der Schlauchleitungsoberfläche zu verbessern, ist vorzugsweise die Wärmeübertragungsfolie auf ihrer der Schlauchleitungsoberfläche zugewandten Seite selbstklebend ausgebildet ist. Auch die Verwendung einer beidseitig selbstklebenden bzw. nur außenseitig selbstklebenden Wärmeübertragungsfolie ist möglich, um (z.B. nach Entfernung einer Abziehfolie von der Außenseite der Wärmeübertragungsfolie) die Anhaftung des Heizmediums auf der Wärmeübertragungsfolie zu verbessern. Alternativ kann auch eine Klebstoffschicht auf die Schlauchleitungsoberfläche aufgebracht werden, bevor die Wärmeübertragungsfolie darauf aufgewickelt wird.

Erfindungsgemäß wird die Wärmeübertragungsfolie außenseitig mit einer Beschichtung, vorzugsweise aus einem Polymer, versehen, die ein Aufschweißen des Heizmediums auf die Wärmeübertragungsfolie ermöglicht. Dieses Aufschweißen kann beispielsweise mittels Ultraschall erfolgen.

Die Schlauchleitung selbst weist beispielsweise einen Außendurchmesser von 5 bis 15 mm, vorzugsweise 7 bis 12 mm auf. Die Wandstärke der Schlauchleitung beträgt vorzugsweise 0,5 bis 2 mm, insbesondere 0,8 bis 1,5 mm. Die vorzugsweise in einem Kaffee-Vollautomaten verbaute Medienleitung ist in der Regel vergleichsweise kurz und weist eine maximale Länge von 50 cm, insbesondere maximal 30 cm, z.B. maximal 25 cm auf.

Zweckmäßigerweise wird auf das Heizmedium außenseitig eine, vorzugsweise polymere, Schutzschicht aufgetragen. Diese Schutzschicht dient einerseits zum mechanischen Schutz des oftmals recht empfindlichen Heizmediums und andererseits gleichzeitig zur Wärmedämmung sowie zur elektrischen Isolierung. Als Material kommt beispielsweise ein Thermoplast, z.B. ein thermisch entsprechend belastbares PA, oder auch ein Elastomer, z.B. Silikon, bspw. Liquid Silicone Rubber (LSR) infrage. Die Schutzschicht kann mittels eines Extrusionsverfahrens aufgebracht werden. Im Rahmen der Erfindung liegt es auch, das Material der Schutzschicht geschäumt auszubilden, um hierdurch die Wärmedämmeigenschaften und auch die elektrische Isolationswirkung zu verbessern. Die Schutzschicht kann vergleichsweise dünn, z.B. mit einer Schichtdicke von maximal 2 mm, insbesondere maximal 1 mm ausgebildet sein. Aufgrund der vorzugsweise vergleichsweise geringen Länge der Medienleitung kann es aber auch zweckmäßig sein, die Schutzschicht mittels Spritzguss aufzutragen. Insbesondere bei einer Anordnung der Medienleitung strömungstechnisch gesehen vor der Brüheinrichtung des Kaffee-Vollautomaten kann es aufgrund des dort herrschenden Überdrucks des Brühwassers (bspw. mehr als 5 bar ü) ferner zweckmäßig sein, die Medienleitung mit einer Armierungsschicht zu versehen, die z.B. aus gewickelten und/oder geflochtenen Filamenten besteht. Diese Armierungsschicht wird zweckmäßigerweise auf die Schutzschicht aufgetragen, wobei die Armierungsschicht wiederum von einer polymeren, vorzugsweise extrudierten oder spritzgegossenen, Außenschicht, z.B. aus PA umgeben werden kann. Die Filamente können alle aus demselben, alternativ aber auch aus unterschiedlichen Materialien bestehen. So liegt es z.B. im Rahmen der Erfindung, dass mehrere Filamente aus unterschiedlichen Werkstoffen gemeinsam einzelne Stränge bilden und diese Stränge zur Herstellung der Armierungsschicht miteinander verflochten oder aufgewickelt werden. Hierbei kann ein einzelner Strang Filamente aus unterschiedlichen Polymeren aufweisen, z.B. Polyester einerseits und Aramid andererseits. Im Rahmen der Erfindung liegt es ebenfalls, die Armierungsschicht mit der darunterliegenden Schicht zu verkleben.

Im Rahmen der Erfindung liegt es auch, dass die Schlauchleitungsoberfläche während des Herstellungsverfahrens der Medienleitung im Auflagebereich der Wärmeübertragungsfolie erhitzt und hierdurch lokal thermisch zersetzt und/oder ausvulkanisiert wird, so dass sich die Haftung des Heizmediums auf der Schlauchleitungsoberfläche verbessert. Sofern eine Schlauchleitung aus Silikon verwendet wird, ist die Verformung bei noch nicht vollständiger Ausvulkanisation des Silikonmaterials möglich. So kann einerseits durch eine entsprechend starke lokale Erhitzung die Schlauchleitungsoberfläche in den Bereichen, in denen die Wärmeübertragungsfolie auf der Oberfläche aufliegt, diese gezielt thermisch zersetzt werden. Überraschenderweise erhöht diese gezielte lokale Zersetzung die Anbindung der Folie an die Oberfläche der Schlauchleitung, so dass insgesamt durch diese Maßnahme die Haftung der Folie auf der Schlauchleitungsoberfläche verbessert wird. Dies gewährleistet auch bei längerem Betrieb beispielsweise einen gleichbleibende gleichmäßige helixförmige Wicklung der Wärmeübertragungsfolie für eine dauerhaft optimale Wärmeübertragung. Vorzugsweise wird die thermische Zersetzung und/oder Verformung der Schlauchleitungsoberfläche durch die Aufwicklung der Wärmeübertragungsfolie bewirkt. Bei einer angestrebten thermischen Zersetzung wird die Wärmeübertragungsfolie entsprechend stark erhitzt. Hierbei hat es sich als besonders vorteilhaft herausgestellt, wenn diese Erhitzung, vorzugsweise vor dem Aufwickelvorgang, mittels Ultraschallbestrahlung der Folie bzw. durch die Bestromung des Heizmediums selbst erfolgt. Zweckmäßigerweise erfolgt die lokale Erhitzung der Schlauchleitungsoberfläche auf eine Temperatur oberhalb 250°C, insbesondere oberhalb 300 °C, vorzugsweise oberhalb 400 °C. Bei Temperaturen von ca. 250 °C beginnt Silikonharz, sich unter Bildung von Kieselsäure zu zersetzen. Diese kann überraschenderweise bei einer Silikon-Schlauchleitung signifikant die Anhaftung der Folie an der Schlauchleitungsoberfläche verbessern. Sofern die Folie (und ggf. auf das Heizmedium) auf die noch nicht ausvulkanisierte Schlauchleitungsoberfläche aufgewickelt wird, kann diese durch den Wickelvorgang plastisch verformt werden. Die Vulkanisation erfolgt dann danach zweckmäßigerweise mit Temperaturen von 150°C bis 200 °C. Auch eine sehr milde Erwärmung auf z.B. mehr als 50°C ist möglich, da der Vulkanisationsprozess grundsätzlich auch (langsam) bei Raumtemperatur abläuft. Vorzugsweise entsteht durch die lokale Erhitzung der Schlauchleitung und/oder die Aufwicklung der Wärmeübertragungsfolie und/oder des Heizmediums mindestens eine lokale Vertiefung auf der Schlauchleitungsoberfläche entlang der Folie, in die die Folie eingebettet wird.

Gegenstand der Erfindung ist auch eine mit dem vorbeschriebenen erfindungsgemäßen Verfahren hergestellte Medienleitung sowie ein Automat zur Zubereitung von Heißgetränken, insbesondere Kaffee, mit einer solchen Medienleitung.

Im Folgenden wird die Erfindung anhand einer lediglich ein Ausführungsbeispiel darstellenden Zeichnung ausführlich erläutert. Es zeigen schematisch:
- Fig. 1: eine schematische Darstellung eines Kaffee-Vollautomaten mit einer erfindungsgemäß hergestellten Medienleitung
- Fig. 2: eine erfindungsgemäß hergestellte Schlauchleitung in einer ausschnittsweisen Längsansicht,
- Fig. 3: die in Fig. 2 dargestellte Schlauchleitung in einer Querschnittsdarstellung und
- Fig. 4, 5: eine alternative Ausführungsform der Erfindung in einer den Fig. 2 bzw. 3 entsprechenden Darstellung

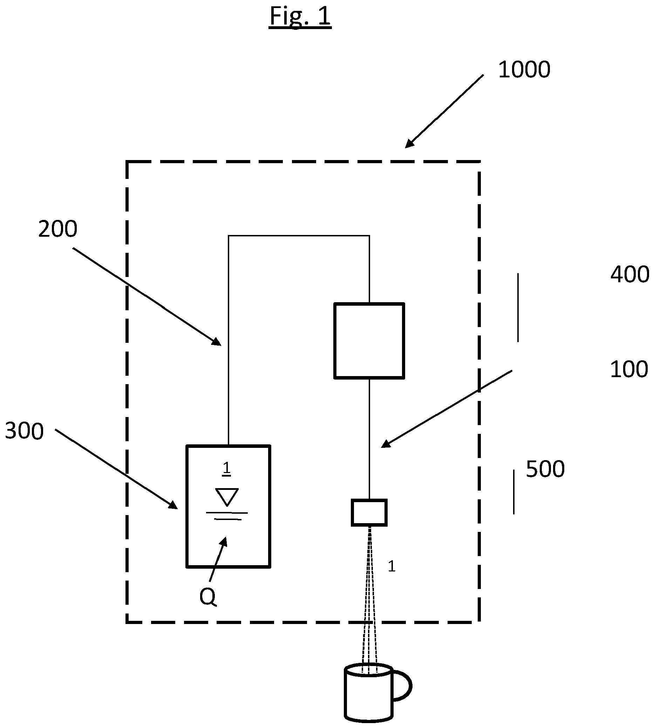

Die Fig. 1 zeigt eine schematische Darstellung eines Automaten zur Zubereitung von Heißgetränken, insbesondere eines Kaffee-Vollautomaten 1000, mit einer erfindungsgemäß hergestellten Medienleitung 100. Der Automat 1000 umfasst neben der Medienleitung 100 einen elektrischen Erhitzer 300 zur Erzeugung von kochend heißem Brühwasser 1, welches durch eine Transportleitung 200 zu einer Brüheinrichtung 400 des Automaten 1000 geführt wird, in der zur Zubereitung von heißem Kaffee Kaffeepulver mit dem Brühwasser 1 überbrüht wird. Dieser frisch zubereitete Kaffee 1 fließt danach von der Brüheinrichtung 400 durch die Medienleitung 100 zur Kaffee-Entnahmeeinrichtung 500 des Automaten 1000 und wird hierbei nacherhitzt. Zusätzlich zur Leitung 100 (oder alternativ) kann auch die Transportleitung 200 zum Transport des Brühwassers 1 vom Erhitzer 300 zur Brüheinrichtung 400 als erfindungsgemäße Medienleitung ausgebildet sein.

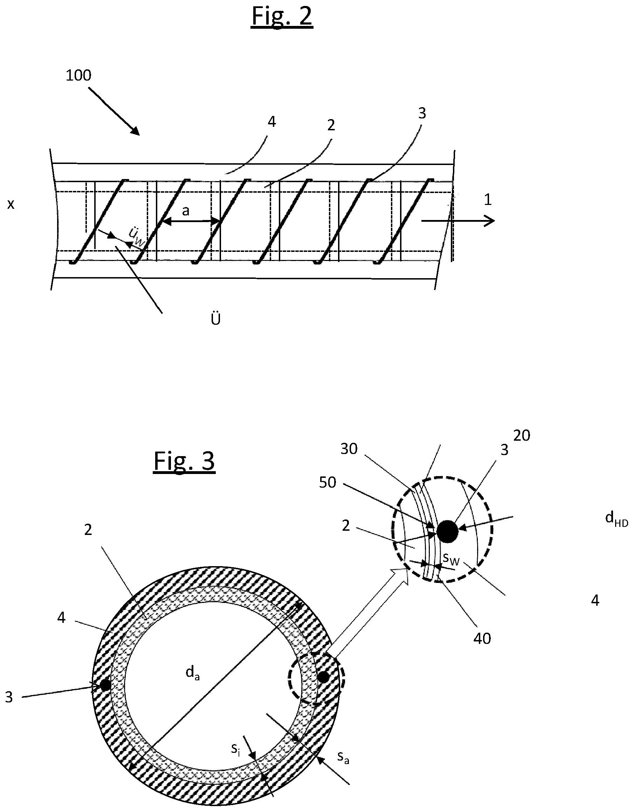

Die Fig. 2 zeigt ausschnittsweise eine Längsansicht der in Fig. 1 dargestellten, elektrisch beheizbaren Medienleitung 100, die zum Transport und zur gleichzeitigen Nacherwärmung des frisch aufgebrühten Kaffee 1 im Kaffee-Vollautomaten 1000 dient. Beim erfindungsgemäßen Verfahren zur Herstellung einer solchen Medienleitung 100 wird im Ausführungsbeispiel auf eine Schlauchleitung 2 aus Silikon außenseitig ein elektrisches Heizmedium in Form zweier elektrischer Heizdrähte 3 helixförmig entlang der Längsachse x der Schlauchleitung 2 aufgewickelt. Die Heizdrähte 3 werden hierbei in axiale Richtung gesehen mit der Länge a gleichmäßig voneinander beabstandet angeordnet. Es ist ferner erkennbar, dass zur Herstellung der Medienleitung 100 entlang der Schlauchleitung 2 außenseitig zwei Wärmeübertragungsfolien 20 aus Aluminium (Wärmeleitfähigkeit λ > 200 W/mK bei 0 °C) helixförmig aufgewickelt werden, wobei auf jeder Folie 20 jeweils ein Heizdraht 3 angeordnet ist. Die Heizdrähte 3 dienen zur Erwärmung der Schlauchleitung 2 und damit des durch die Schlauchleitung 2 transportierten Fluids 1, wobei die Wärmeübertragung von den Heizdrähten 3 auf die Schlauchleitungsoberfläche durch die Wärmeübertragungsfolien 20 über diese Oberfläche vergleichmäßigt wird. Die Wärmeübertragungsfolien 20 weisen jeweils eine Schichtdicke s_{W} von 10 bis 40 µm auf. Es ist erkennbar sich die Wicklungen der Wärmeübertragungsfolien 20 randseitig überlappen, wobei die Breite üw der Überlappungsbereiche Ü 1 bis 3 mm beträgt.

Die Aufwicklung der Heizdrähte 3 kann mittels eines separaten Fertigungsvorgangs auf die Wärmeübertragungsfolien 20 nach deren Aufwicklung auf die Schlauchleitungsoberfläche erfolgen. Alternativ hierzu ist es jedoch auch möglich, dass jeweils ein Heizdraht 3 auf eine Wärmeübertragungsfolie 20 aufgebracht, z.B. aufgeklebt oder aufgeschweißt, wird, bevor ein Verbund aus Heizdraht 3 und Folie 20 auf die Schlauchleitung 2 aufgewickelt wird. Im Ausführungsbeispiel sind die Heizdrähte 3 und die Wärmeübertragungsfolien 20 gleichsinnig gewickelt. Sofern die Aufbringung der Heizdrähte 3 erst nach der Aufwicklung der Folien 20 auf die Schlauchleitung 2 erfolgt, ist es grundsätzlich auch möglich, dass die helixförmigen Wicklungen von Drähten 3 und Folien 20 gegensinnig erfolgen und sich entsprechend kreuzen (nicht dargestellt).

Wie insbesondere anhand des vergrößerten Ausschnittes in Fig. 3 rechts erkennbar ist, weisen die Heizdrähte 3 einen kreisförmigem Querschnitt mit einem Durchmesser d_{HD} von 0,5 bis 1,5 mm auf. Die Wärmeübertragungsfolien 20 sind auf ihrer der Schlauchleitungsoberfläche zugewandten Seite selbstklebend ausgebildet und weisen auf dieser entsprechend eine Klebstoffschicht 30 auf, wodurch die Haftung der Folien 20 auf der Schlauchleitungsoberfläche verbessert wird. Alternativ kann auch eine Kleberschicht auf die Schlauchleitung 2 aufgetragen werden, bevor die Folien 20 aufgewickelt werden. Ferner weisen die Wärmeübertragungsfolien 20 außenseitig eine polymere Beschichtung 40 auf, die ein Aufschweißen der Heizdrähte 3 auf die Folien 20 ermöglicht (entweder vor der Aufwicklung der Folien 20 auf die Schlauchleitung 2 oder auch danach), z.B. mittels Ultraschalleritzung der Heizdrähte 3 oder durch eine Erhitzung der Heizdrähte 3 mittels elektrischer Bestromung. Bei der Aufschweißung der Heizdrähte 3 wird das Material der Beschichtung 40 lokal aufgeschmolzen, so dass sich im Auflagebereich eines Heizdrahtes 3 in der Beschichtung 40 eine an die Kontur des Heizdrahtes 3 angepasste Vertiefung 50 bildet. Alternativ kann die Schicht 40 auch als Klebstoffschicht ausgebildet sein.

Außenseitig auf die Heizdrähte 3 wird eine polymere Schutzschicht 4, z.B. aus Polyamid, aufgetragen, die sowohl zum mechanischen Schutz der Drähte 3 als auch zur Wärmeisolierung dient und z.B. eine Schichtdicke sₐ von 0,2 bis 0,8 mm aufweist. Die Schlauchleitung 2 selbst weist einen Außendurchmesser d_{A} von 5 bis 15 mm, vorzugsweise 7 bis 12 mm auf. Die Wandstärke sᵢ der Schlauchleitung 2 beträgt vorzugsweise 0,5 bis 2 mm, insbesondere 0,8 bis 1,5 mm. Die Schlauchleitung 2 ist vergleichsweise kurz und weist eine maximale Länge von 30 cm auf.

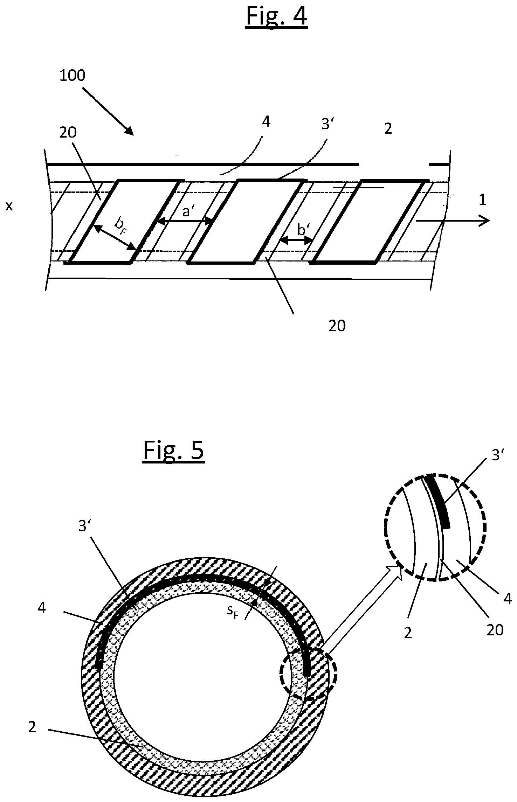

Im Ausführungsbeispiel gemäß Fig. 4 und 5 ist das Heizmedium als elektrische Heizfolie 3' ausgebildet, welches ebenfalls helixförmig entlang der Schlauchleitungsachse x auf die Schlauchleitung 2 aufgewickelt wird. Die Breite b_{F} der Heizfolie 3' ist im Querschnitt gesehen mehr als 20 mal so groß wie deren Dicke s_{F}, welche 0,2 - 0,8 mm beträgt. Im Ausführungsbeispiel wird lediglich eine Heizfolie 3' auf die Schlauchleitung 2 aufgewickelt. Die einzelnen Wicklungen der Heizfolie 3' werden hierbei in axiale Richtung gesehen mit der Länge a' gleichmäßig voneinander beabstandet angeordnet. Die Heizfolie 3' ist wiederum auf eine die Wärmeübertragung über die Schlauchleitungsoberfläche vergleichmäßigende Wärmeübertragungsfolie 20 aus Aluminium aufgebracht. In diesem Ausführungsbeispiel sind die Wicklungen der Folie 20 randseitig voneinander mit der Länge b` beabstandet, so dass hier keine Überlappungsbereiche vorhanden sind.

Sofern die Medienleitung zum Transport von Brühwasser 1 hin zur Brüheinrichtung 400 des Kaffee-Vollautomaten 1000 dient (dargestellt durch die Transportleitung 200 in Fig. 1), ist diese aufgrund des dort herrschenden hohen Druckes zusätzlich mit einer (in den Fig. nicht dargestellten) Armierungsschicht aus gewickelten oder geflochtenen Filamenten versehen, die wiederum von einer polymeren, vorzugsweise extrudierten, Außenschicht, z.B. aus PA umgeben wird.

Alternativ zur Verwendung der erfindungsgemäß hergestellten Medienleitung 100 in einem Kaffee-Vollautomaten 1000 kann diese auch z.B. in einfachen Kaffeemaschinen sowie Maschinen zur Zubereitung von Tee oder anderen Heißgetränken zum Einsatz kommen.

## Patentansprüche

1. Verfahren zur Herstellung einer beheizbaren Medienleitung (100), insbesondere zur Führung und gleichzeitigen Nacherwärmung von Brühwasser oder eines frisch aufgebrühten Heißgetränkes (1) in einem Heißgetränke-Automaten (1000), wobei entlang einer Schlauchleitung (2) außenseitig mindestens eine die Wärmeübertragung über die Schlauchleitungsoberfläche vergleichmäßigende Wärmeübertragungsfolie (20) aus einem Material mit einer Wärmeleitfähigkeit bei 0 °C von λ > 10 W/mK, vorzugsweise λ > 50 W/mK, aufgewickelt wird, und wobei auf die Wärmeübertragungsfolie (20) ein elektrisches Heizmedium (3, 3') aufgebracht wird, das zur Erwärmung der Schlauchleitungsoberfläche dient, **dadurch gekennzeichnet, dass** die Wärmeübertragungsfolie (20) außenseitig mit einer Beschichtung (40), vorzugsweise aus einem Polymer, versehen ist, die ein Aufschweißen des Heizmediums (3, 3') auf die Wärmeübertragungsfolie (20) ermöglicht.

2. Verfahren nach Anspruch 1, **dadurch gekennzeichnet, dass** die Wärmeübertragungsfolie (20) aus einem metallischen Werkstoff, vorzugsweise Aluminium oder Kupfer, besteht.

3. Verfahren nach Anspruch 1 oder 2, **dadurch gekennzeichnet, dass** die Wärmeübertragungsfolie (20) eine Schichtdicke von maximal 100 µm, vorzugsweise maximal 30 µm aufweist.

4. Verfahren nach einem der Ansprüche 1 bis 3, **dadurch gekennzeichnet, dass** die Aufbringung des Heizmediums (3, 3') nach der Aufwicklung der Wärmeübertragungsfolie (20) erfolgt.

5. Verfahren nach einem der Ansprüche 1 bis 3, **dadurch gekennzeichnet, dass** das Heizmedium (3, 3') bereits vor der Aufwicklung der Wärmeübertragungsfolie (20) auf diese aufgebracht wird.

6. Verfahren nach einem der Ansprüche 1 bis 5, **dadurch gekennzeichnet, dass** die Aufwicklung der Wärmeübertragungsfolie (20) und/oder des Heizmediums (3, 3`) helixförmig entlang der Achse (x) der Schlauchleitung (2) erfolgt.

7. Verfahren nach Anspruch 6, **dadurch gekennzeichnet, dass** die Wicklung der Wärmeübertragungsfolie (20) gegensinnig zur Wicklung des Heizmediums (3, 3') erfolgt.

8. Verfahren nach einem der Ansprüche 1 bis 7, **dadurch gekennzeichnet, dass** sich die einzelnen Wicklungen der mindestens einen Wärmeübertragungsfolie (20) randseitig überlappen.

9. Verfahren nach einem der Ansprüche 1 bis 8, **dadurch gekennzeichnet, dass** die Schlauchleitung (2) Silikon enthält oder aus Silikon besteht.

10. Verfahren nach einem der Ansprüche 1 bis 9, **dadurch gekennzeichnet, dass** das Heizmedium mindestens einen Heizdraht (3) mit vorzugsweise kreisförmigem Querschnitt und/oder mindestens eine Heizfolie (3`) umfasst.

11. Verfahren nach einem der Ansprüche 1 bis 10, **dadurch gekennzeichnet, dass** die Wärmeübertragungsfolie (20) auf ihrer der Schlauchleitungsoberfläche zugewandten Seite oder beidseitig selbstklebend ausgebildet ist.

12. Verfahren nach einem der Ansprüche 1 bis 11, **dadurch gekennzeichnet, dass** auf das Heizmedium (3, 3') außenseitig eine, vorzugsweise polymere, Schutzschicht (4) aufgetragen wird.

## Claims

1. Method for the production of a heatable medium line (100), in particular for guiding and simultaneous post-heating of brewing water or of a freshly-brewed hot beverage (1) in a hot beverage vending machine (1000), wherein at least one heat transfer foil (20) of a material having a heat conductivity at 0° of λ > 10 W/mK, preferably of λ > 50 W/mk and homogenizing the heat transfer via the hose line surface along a hose line (2) is wound up on the outer side, and wherein an electric heating medium (3, 3') is applied onto the heat transfer foil (20), which medium serves to heat up the hose line surface, **characterized in that** on the outer side, the heat transfer foil (20) is provided with a coating (40), preferably of a polymer, which coating allows for welding the heating medium (3, 3') onto the heat transfer foil (20).

2. Method according to claim 1, **characterized in that** the heat transfer foil (20) consists of a metallic material, preferably aluminum or copper.

3. Method according to claim 1 or 2, **characterized in that** the heat transfer foil (20) has a layer thickness of 100 µm at maximum, preferably of 30 µm at maximum.

4. Method according to one of claims 1 to 3, **characterized in that** applying the heating medium (3, 3') takes place after winding up the heat transfer foil (20).

5. Method according to one of claims 1 to 3, **characterized in that** the heating medium (3, 3') is already applied onto the heat transfer foil (20) prior to winding up said foil.

6. Method according to one of claims 1 to 5, **characterized in that** winding up the heat transfer foil (20) and/or the heating medium (3, 3') takes place helically along the axis (x) of the hose line (2).

7. Method according to claim 6, **characterized in that** winding the heat transfer foil (20) takes place inversely to winding the heating medium (3, 3').

8. Method according to one of claims 1 to 7, **characterized in that** the individual windings of the at least one heat transfer foil (20) overlap on the side of the edges.

9. Method according to one of claims 1 to 8, **characterized in that** the hose line (2) consists of or contains silicone.

10. Method according to one of claims 1 to 9, **characterized in that** the heating medium includes at least one heating wire (3) of preferably circular cross-section and/or at least one heating foil (3').

11. Method according to one of claims 1 to 10, **characterized in that** the heat transfer foil (20) is configured to be self-sticking on its side facing the hose line surface or on both sides.

12. Method according to one of claims 1 to 11, **characterized in that** a preferably polymeric protective layer (4) is applied onto the heating medium (3, 3') on its outer side.

## Revendications

1. Procédé de fabrication d'une conduite de milieu (100) pouvant être chauffée, en particulier pour le guidage et le réchauffement simultané d'eau d'infusion ou d'une boisson chaude (1) fraîchement infusée dans un distributeur automatique de boissons chaudes (1000), il étant enroulée sur le côté extérieur le long d'une conduite flexible (2) au moins une feuille de transfert de chaleur (20) en un matériau ayant une conductivité thermique à 0 °C de λ > 10 W/mK, de préférence de λ > 50 W/mK, uniformisant le transfert de chaleur sur la surface de la conduite flexible, et un milieu chauffant électrique (3, 3'), qui sert à chauffer la surface de la conduite flexible, étant appliqué sur la feuille de transfert de chaleur (20), **caractérisé en ce que** la feuille de transfert de chaleur (20) est pourvue, sur le côté extérieur, d'un revêtement (40), de préférence en un polymère, qui permet de souder le milieu chauffant (3, 3') sur la feuille de transfert de chaleur (20).

2. Procédé selon la revendication 1, **caractérisé en ce que** la feuille de transfert de chaleur (20) est constituée d'un matériau métallique, de préférence d'aluminium ou de cuivre.

3. Procédé selon la revendication 1 ou 2, **caractérisé en ce que** la feuille de transfert de chaleur (20) présente une épaisseur de couche de 100 µm maximum, de préférence de 30 µm maximum.

4. Procédé selon l'une quelconque des revendications 1 à 3, **caractérisé en ce que** l'application du milieu chauffant (3, 3') s'effectue après l'enroulement de la feuille de transfert de chaleur (20).

5. Procédé selon l'une quelconque des revendications 1 à 3, **caractérisé en ce que** le milieu chauffant (3, 3') est appliqué sur la feuille de transfert de chaleur (20) avant même l'enroulement de celle-ci.

6. Procédé selon l'une quelconque des revendications 1 à 5, **caractérisé en ce que** l'enroulement de la feuille de transfert de chaleur (20) et/ou du milieu chauffant (3, 3') s'effectue en hélice le long de l'axe (x) de la conduite flexible (2).

7. Procédé selon la revendication 6, **caractérisé en ce que** l'enroulement de la feuille de transfert de chaleur (20) s'effectue en sens inverse de l'enroulement du milieu chauffant (3, 3').

8. Procédé selon l'une quelconque des revendications 1 à 7, **caractérisé en ce que** les enroulements individuels de l'au moins une feuille de transfert de chaleur (20) se chevauchent sur le bord.

9. Procédé selon l'une quelconque des revendications 1 à 8, **caractérisé en ce que** la conduite flexible (2) contient de la silicone ou est constituée de silicone.

10. Procédé selon l'une quelconque des revendications 1 à 9, **caractérisé en ce que** le milieu chauffant comprend au moins un fil chauffant (3) ayant une section transversale de préférence circulaire et/ou au moins une feuille chauffante (3').

11. Procédé selon l'une quelconque des revendications 1 à 10, **caractérisé en ce que** la feuille de transfert de chaleur (20) est configurée sous forme autocollante sur son côté tourné vers la surface de la conduite flexible ou des deux côtés.

12. Procédé selon l'une quelconque des revendications 1 à 11, **caractérisé en ce qu'**une couche de protection (4), de préférence polymère, est appliquée sur le milieu chauffant (3, 3') sur le côté extérieur.
